Europäisches Patentamt

European Patent Office

Office européen des brevets

(11) Veröffentlichungsnummer: **0 444 458 A2**

## EUROPÄISCHE PATENTANMELDUNG

(21) Anmeldenummer: 91101795.2

(22) Anmeldetag: 08.02.91

(51) Int. Cl.5: **G01S 13/53**, G01S 13/22, G01S 13/24

(30) Priorität: 02.03.90 DE 4006600

(43) Veröffentlichungstag der Anmeldung:
04.09.91 Patentblatt 91/36

(84) Benannte Vertragsstaaten:
DE FR GB IT

(71) Anmelder: Siemens Aktiengesellschaft
Wittelsbacherplatz 2
W-8000 München 2(DE)

(72) Erfinder: Hauptmann, Rudolf, Dipl.-Ing.
Augustenfelderstrasse 23
W-8060 Dachau(DE)
Erfinder: Weis, Klaus, Dipl.-Ing.
Wallbergweg 2
W-8031 Gilching(DE)

(54) Puls-Doppler-Radar.

(57) Die Erfindung betrifft ein Puls-Doppler-Radar mit hoher Pulsfolgefrequenz (PRF) mit einer Sendeeinrichtung, einer Antenne und einem Sende-Empfangs-Umschalter, mit einer Empfangseinrichtung einem nachgeschalteten Bewegtzeichenfilter und mit einer Einrichtung zur Entfernungszuordnung der Zielechosignale und einem Sichtgerät. Erfindungsgemäß gibt die Sendeeinrichtung mindestens zwei unterschiedliche Trägerfrequenzen mit jeweils einer eigenen, voneinander unterschiedlichen Pulsfolgefrequenz ab, sind mindestens zwei parallele Empfangszweige mit jeweils einer, einer der Trägerfrequenzen zugeordneten Empfangseinrichtung und jeweils einem nachgeschalteten Bewegtzeichenfilter vorgesehen und ist mindestens ein Verknüpfungsglied vorgesehen, über das die Zielechosignale von den Empfangszweigen an das Sichtgerät gelangen.

FIG 4

$$PRF1 \neq PRF2 \neq PRF3 \neq \ldots$$
$$f1 \neq f2 \neq f3 \neq \ldots$$

EP 0 444 458 A2

Die Erfindung betrifft ein Puls-Doppler-Radar gemäß dem Oberbegriff des Patentanspruchs 1.

Ein solches Puls-Doppler-Radar ist aus der DE-OS 31 10 324 bekannt.

Aus der DE-PS 30 41 465 ist es bekannt, bei einem Verfolgungsradar aufeinanderfolgende Radarpulse mit unterschiedlichen Trägerfrequenzen auszusenden. Die empfangenen Zielechosignale werden in einer einzigen Empfangseinrichtung verarbeitet.

Es ist weiter bekannt, zur Erkennung von Überreichweitenechos die Radarpulse mit einer gestaffelten Pulsfrequenz bzw. Pulsfolgefrequenz (staggered PRF) auszusenden.

Der Erfindung liegt die Aufgabe zugrunde, bei einem mit einer hohen Pulsfrequenz arbeitenden Pulsdopplerradar die Reichweite zu vergrößern.

Diese Aufgabe wird erfindungsgemäß durch die im Patentanspruch 1 angegebenen Merkmale gelöst.

Bei einer vorteilhaften Weiterbildung des erfindungsgemäßen Puls-Doppler-Radars bei Verwendung von mindestens drei unterschiedlichen Trägerfrequenzen ist sowohl eine lückenlose Dopplerbedeckung des abgetasteten Entfernungsbereiches als auch eine Überreichweitenerkennung bei den Zielechosignalen möglich.

Im folgenden wird die Erfindung anhand eines in der Zeichnung dargestellten Ausführungsbeispieles erläutert. Dabei zeigen

Fig. 1 ein Puls-Doppler-Radar mit zwei Empfangszweigen und einem nachgeschalteten Oder-Gatter,

Fig. 2 erläuternde Diagramme zur Wirkungsweise,

Fig. 3 ein Puls-Doppler-Radar mit zwei Empfangszweigen und einem nachgeschalteten Und-Gatter und

Fig. 4 ein Puls-Doppler-Radar mit mindestens drei Empfangszweigen, mehreren nachgeschalteten Und- und einem nachgeschalteten Oder-Gatter.

Der Erfindung liegt der Gedanke zugrunde, aufeinanderfolgende Radarpulse mit mindestens zwei unterschiedlichen Pulsfrequenzen PRF1, PRF2 auszusenden. Jede der Pulsfrequenzen PRF1, PRF2 wird mit einer zugeordneten unterschiedlichen Trägerfrequenz f1, f2 abgestrahlt.

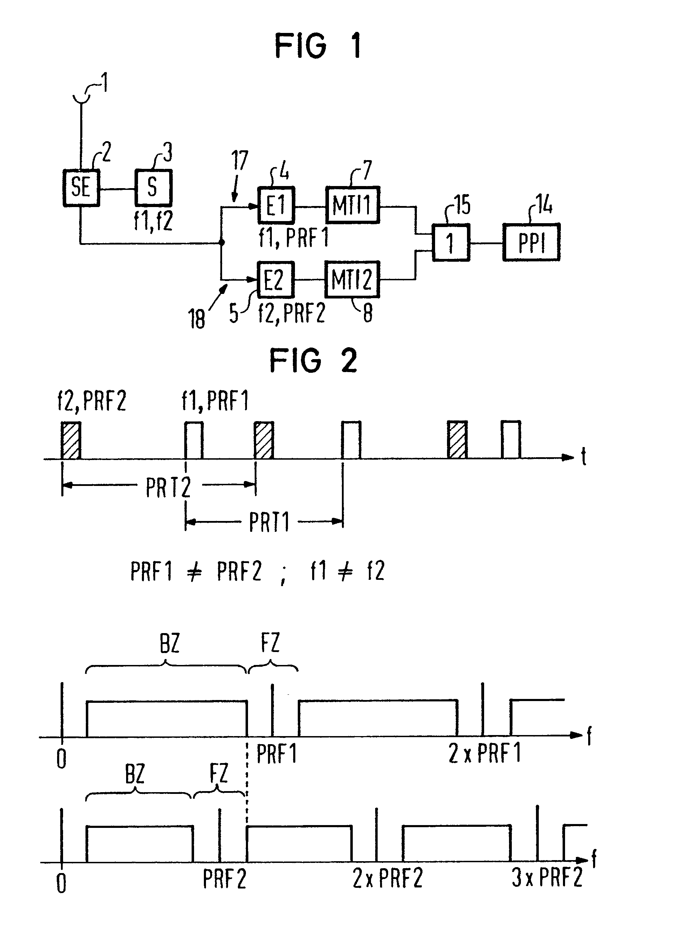

Hierzu weist das in Fig. 1 dargestellte Puls-Doppler-Radar eine Sendeeinrichtung 3 auf, in der diese Radarpulse mit unterschiedlichen Trägerfrequenzen f1, f2 erzeugt werden. Über einen Sende-Empfangs-Umschalter 2 gelangen diese Radarpulse an eine Antenne 1 und werden abgestrahlt.

Die von der Antenne 1 empfangenen Zielechosignale gelangen in an sich bekannter Weise über den jetzt in einer anderen Schalterstellung befindlichen Sende-Empfangs-Umschalter 2 an zwei parallel angeordnete Empfangszweige 17, 18. Jeder der Empfangszweige 17, 18 weist eine Empfangseinrichtung 4 bzw. 5 sowie ein nachgeschaltetes Bewegtzeichenfilter 7 bzw. 8 auf.

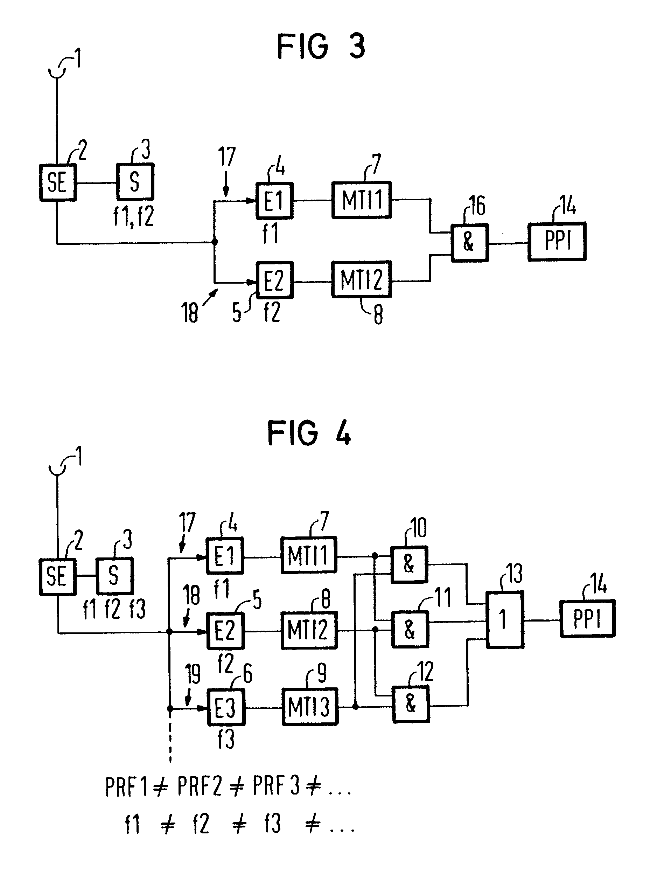

Die Empfangseinrichtungen 4 und 5 (und 6 in Fig. 3) enthalten in an sich bekannter Weise Mischer, ZF-Verstärker, Phasendiskriminatoren und bedarfsweise Analog-Digitalwandler.

Die Bewegtzeichenfilter 7 und 8 (und 9 in Fig. 3) enthalten Dopplerfilter oder eine Einrichtung zur schnellen Fourier-Transformation zur Unterdrükkung von Festzeichen. Weiter enthalten sie eine Einrichtung zur Entfernungszuordnung der Zielechosignale, beispielsweise eine Entfernungstorbank. Die empfangenen Zielechosignale aus unterschiedlichen Entfernungen fallen hierbei aufgrund der unterschiedlichen Laufzeiten in verschiedene Entfernungstore. Hierdurch können die Zielechosignale verschiedenen Entfernungsbereichen zugeordnet werden.

Den Bewegtzeichenfiltern 7 bis 9 können Gleichrichter, Nachintegrationsschaltungen und Schwellenschaltungen nachgeschaltet sein. Diese Bausteine sind in den Figuren 1, 3 und 5 nicht explizit dargestellt, da sie für die Erfindung von untergeordneter Bedeutung sind.

Bei dem in Fig. 1 dargestellten Puls-Doppler-Radar ist erfindungsgemäß die erste Empfangseinrichtung 4 im oberen Empfangszweig 17 auf die erste Trägerfrequenz f1, und die zweite Empfangseinrichtung 5 im unteren Empfangszweig 18 auf die zweite Trägerfrequenz f2 abgestimmt.

Die beiden Empfangszweige 17, 18 liegen an einem Oder-Gatter 15 an, dem ein Sichtgerät 14 nachgeschaltet ist.

Bei der folgenden Beschreibung des in Fig. 1 dargestellten Puls-Doppler-Radars wird auch auf die Fig. 2 Bezug genommen.

Die zeitlich aufeinanderfolgenden Radarpulse weisen zwei unterschiedliche Trägerfrequenzen f1, f2 auf. Die Radarpulse mit der ersten Trägerfrequenz f1 werden mit einer ersten Pulsfrequenz PRF1, und die mit der zweiten Trägerfrequenz f2 werden mit einer zweiten Pulsfrequenz PRF2 abgegeben. Die beiden Pulsfrequenzen PRF1 und PRF2 und damit auch die Pulswiederholzeiten PRT1 und PRT2 der entsprechenden Radarpulse sind verschieden. Beide Pulsfrequenzen PRF1 und PRF2 liegen im sogenannten Mittel- bzw. Hoch-PRF-Bereich.

Bei der frequenzmäßigen Darstellung der Radarpulse treten in den Bewegtzeichenfiltern 7 bzw. 8 Frequenzbereiche BZ auf, in denen Bewegtzeichen (Zielechosignale von bewegten Objekten) erkannt werden können. Diese Bewegtzeichenbereiche BZ sind voneinander durch Frequenzbereiche FZ getrennt, in denen Festzeichen (von unbewegten oder sich sehr langsam bewegenden Objekten) liegen. Diese Festzeichenbereiche FZ treten bei den Vielfachen der Pulsfrequenzen PRF1 bzw. PRF2 auf.

Diese Festzeichenbereiche FZ werden auch als Blindgeschwindigkeitszonen bezeichnet, da in ihnen keine bewegten Objekte erkannt werden können. Die Zielechosignale der bewegten Objekte weisen gegenüber den Festzeichen eine Dopplerverschiebung auf.

Durch einen entsprechenden frequenzmäßigen Versatz der Pulsfrequenzen PRF1 bzw. PRF2 gegeneinander kann erreicht werden, daß keine Blindgeschwindigkeitszonen (Festzeichenbereiche FZ) auftreten (lückenlose Dopplerbedeckung). Da die beiden Empfangszweige 17, 18 über ein Oder-Gatter 15 zusammengeführt sind, "sieht" daher das Puls-Doppler-Radar über mindestens einen der Empfangszweige 17, 18 das Ziel. (Eine Erkennung von Überreichweiten ist aber demzufolge ausgeschlossen. Siehe hierzu die Beschreibung zu Fig. 3.)

Eine noch verbesserte sogenannte Dopplerbedeckung hin zu höheren Geschwindigkeiten ergibt sich bei der Verwendung von drei Empfangszweigen mit drei unterschiedlichen Pulsfrequenzen, jeweils verbunden mit einer eigenen Trägerfrequenz. Diese wären dann, analog zu Fig. 1, über ein Oder-Gatter mit drei Eingängen zusammenzuführen.

Durch die unterschiedlichen Pulsfrequenzen PRF1, PRF2 verbreitern sich die Entdeckungslücken der beiden Empfangseinrichtungen 4 und 5. Jedes zweite empfangene Zielechosignal mit der Trägerfrequenz f1 bzw. f2 verschiebt sich innerhalb der Empfangsperiode des vorhergehenden Pulses mit der Trägerfrequenz f2 bzw. f1. Der auf die erste (bzw. zweite) Trägerfrequenz f1 (bzw. f2) abgestimmte Empfangszweig 17 kann, da der Sende-Empfangs-Umschalter 2 beim Aussenden des Pulses mit der zweiten (bzw. ersten) Trägerfrequenz f2 (bzw. f1) den Sender 3 mit der Antenne 1 verbindet, kein Echosignal empfangen. Um die Entdeckungslücken so klein wie möglich zu halten, sollte die Differenz der beiden Pulsfrequenzen PRF1 und PRF2 so klein wie möglich sein. Ein anderer Grenzwert für die Differenz der beiden Pulsfrequenzen PRF1 und PRF2 ist der schon beschriebene notwendige Versatz für eine lückenlose Dopplerbedeckung, d.h. dafür daß keine Bildgeschwindigkeitsbereiche (Festzeichenbereiche FZ) entstehen. (Wie schon beschrieben ist es möglich, das Puls-Doppler-Radar in Fig. 1 mit einem dritten Empfangszweig zu versehen.) Die Anzahl der Impulse, die innerhalb eines sogenannten Burst (Pulsgruppe) ausgesendet werden, sollte so gering wie möglich sein.

Das in Fig. 3 dargestellte Puls-Doppler-Radar unterscheidet sich von dem in Fig. 1 dargestellten in einem Punkt: Anstelle des Oder-Gatters 15 ist in Fig. 3 ein Und-Gatter 16 vorgesehen.

Durch das Zusammenführen der beiden Empfangszweige 17, 18 mit dem Und-Gatter 16 ist eine Erkennung von Zielechosignalen aus sogenannten Überreichweiten möglich. Ein solches Signal liegt vor, wenn das Zielechosignal nicht innerhalb der auf den Radarpuls folgenden Radarperiode von der Antenne 1 empfangen wird, sondern ein oder zwei Radarperioden später. Solche Überreichweitensignale sind sehr störend, da sie ein Echosignal im eindeutigen, durch die Pulsfrequenz PRF vorgegebenen Bereich vortäuschen.

Bei der folgenden Beschreibung des in Fig. 3 dargestellten Puls-Doppler-Radars wird auf die Fig. 2 Bezug genommen.

Zielechosignale aus einer Überreichweite fallen aufgrund der unterschiedlichen Pulsfrequenzen PRF1 und PRF2 im oberen Empfangszweig 17 in ein anderes Entfernungstor als im unteren Empfangszweig 18. Über das Und-Gatter 16 werden nur Zielechosignale an das Sichtgerät 14 gegeben, die in beiden Empfangszweigen in das der ein- und derselben Entfernung zugeordnete Entfernungstor fallen.

Die beiden unterschiedlichen Pulsfrequenzen PRF1, PRF2 ergeben also praktisch für die Überreichweitenerkennung das gleiche Ergebnis wie eine gestaffelte Pulsfrequenz. Erfindungsgemäß ist aber jede der Pulsfrequenzen PRF1, PRF2 mit einer anderen Trägerfrequenz f1, f2 gekoppelt.

Es treten aber bei dem in Fig. 3 dargestellten Puls-Doppler-Radar Blindgeschwindigkeitsbereiche (Festzeichenbereiche FZ) auf. Dies sind die Bereiche, in denen bei der frequenzmäßigen Darstellung auch nur in einem der Empfangszweige ein Festzeichenbereich FZ vorliegt. Da die beiden Empfangszweige 17, 18 über ein Und-Gatter 16 zusammengeführt sind, "sieht" daher das Puls-Doppler-Radar das Ziel nur dann, wenn es in beiden Empfangszweigen 17, 18 im jeweils gleichen Entfernungstor der Bewegtzeichenfilter 7, 8 liegt.

Um eindeutige Entdeckungsverhältnisse durch identische relative Dopplerfrequenzen zu erhalten, sollen die Pulsfrequenzen PRF1 und PRF2 zueinander annähernd das gleiche zahlenmäßige Verhältnis aufweisen wie die Trägerfrequenzen f1, f2. Der Unterschied der beiden Pulswiederholzeiten PRT1, PRT2 bzw. der Pulsfrequenzen PRF1, PRF2 sollte allerdings mindestens eine Pulsdauer betragen, um die Überreichweitenerkennung zu ermöglichen.

Um sowohl diese Blindgeschwindigkeitsbereiche zu vermeiden, als auch Zielechosignale als Überreichweiten zu erkennen, wird das in Fig. 3 dargestellte Puls-Doppler-Radar vorgeschlagen.

Dieses weist wie die in Fig. 1 und 3 dargestellten Puls-Doppler-Radargeräte die Antenne 1, den Sende-Empfangs-Umschalter 2 und den Sender 3 auf. Die Zielechosignale liegen an mindestens drei Empfangszweigen 17, 18, 19 an, die jeweils eine Empfangseinrichtung 4, 5, 6 und jeweils ein nachgeschaltetes Bewegtzeichenfilter 7, 8, 9 enthalten. Jeweils zwei dieser Empfangszweige sind über eines der Und-Gatter 10, 11, 12 zusammengeführt. Der erste Empfangszweig 17 und der dritte Empfangszweig 19 liegen am ersten Und-Gatter 10 an. Der erste Empfangszweig 17 und der zweite Empfangszweig 18 liegen am zweiten Und-Gatter 11 an. Der zweite Empfangszweig 18 und der dritte Empfangszweig 19 liegen am dritten Und-Gatter 12 an.

Die Ausgänge der Und-Gatter 10, 11, 12 liegen an drei Eingängen eines Oder-Gatters 13 an, dessen Ausgang mit dem Sichtgerät 14 verbunden ist.

Jede der Empfangseinrichtungen 4, 5, 6 ist erfindungsgemäß auf eine andere Trägerfrequenz f1, f2, f3 abgestimmt. Diese Trägerfrequenzen f1, f2, f3 werden mit einer anderen Pulsfrequenz PRF1, PRF2, PRF3 von dem Sender 3 abgegeben.

Durch die paarweise Zusammenführung der Empfangszweige 17, 18, 19 über die Und-Gatter 10, 11, 12 ist die Erkennung von Zielechosignalen aus Überreichweiten möglich (siehe hierzu die Beschreibung zu Fig. 3).

Durch die Zusammenführung der Ausgangssignale der Und-Gatter 10, 11, 12 über das Oder-Gatter 13 wird eine lückenlose Dopplerbedeckung im durch die Pulsfrequenzen PRF1, PRF2, PRF3 vorgegebenen Frequenzbereich erreicht (siehe hierzu die Beschreibung zu Fig.1).

Zur Vergrößerung der Reichweite und/oder um noch höhere Geschwindigkeiten zu erfassen, können auch mehr als drei Empfangszweige im Puls-Doppler-Radar vorgesehen sein, wobei jeder der Empfangszweige auf eine für sich bestimmte Trägerfrequenz abgestimmt ist. Die diesen Trägerfrequenzen f zugeordneten Pulsfrequenzen PRF müssen untereinander nicht alle verschieden sein.

Bezugszeichenliste

1
= Antenne
2
= Sende-Empfangs-Umschalter
3
= Sendeeinrichtung
4
= erste Empfangseinrichtung
5
= zweite Empfangseinrichtung
6
= dritte Empfangseinrichtung
7
= erstes Bewegtzeichenfilter
8
= zweites Bewegtzeichenfilter

9
= drittes Bewegtzeichenfilter
10
= erstes Und-Gatter
11
= zweites Und-Gatter
12
= drittes Und-Gatter
13
= Oder-Gatter
14
= Sichtgerät
15
= Oder-Gatter
16
= Und-Gatter
17, 18, 19
= Empfangszweige
A1,A2,A3
= erste, zweite, dritte Trägerfrequenz
PRF1,PRF2,PRF3
= erste, zweite, dritte Pulsfolgefrequenz
PRT1, PRT2
= Pulswiederholzeiten
BZ
= Bewegtzeichenbereiche
FZ
= Festzeichenbereiche

## Patentansprüche

1. Puls-Doppler-Radar mit einer Pulsfrequenz (PRF)
   mit einer Sendeeinrichtung (3), einer Antenne (1) und einem Sende-Empfangs-Umschalter (2),
   mit einer Empfangseinrichtung (4, 5, 6), einem nachgeschalteten Bewegtzeichenfilter (7, 8, 9), und
   mit einer Einrichtung zur Entfernungszuordnung der Zielechosignale und einem Sichtgerät (14),
   **dadurch gekennzeichnet,** daß die Sendeeinrichtung (3) mindestens zwei unterschiedliche Trägerfrequenzen (f1, f2) mit jeweils einer eigenen, voneinander unterschiedlichen Pulsfrequenz (PRF1, PRF2) abgibt, mindestens zwei parallele Empfangszweige (17, 18) mit jeweils einer, einer der Trägerfrequenzen (f1, f2) zugeordneten Empfangseinrichtung (4, 5) und jeweils einem nachgeschalteten Bewegtzeichenfilter (7,8) vorgesehen sind, und mindestens ein Verknüpfungsglied vorgesehen ist, über das die Zielechosignale von den Empfangszweigen (17, 18) an das Sichtgerät (14) gelangen.

2. Puls-Doppler-Radar nach Anspruch 1,

**dadurch gekennzeichnet,**
daß das Verknüpfungsglied ein Oder-Gatter (15) ist, so daß mit den beiden Empfangszweigen (17, 18) eine lückenlose Dopplerbedeckung gegeben ist.

3.  Puls-Doppler-Radar nach Anspruch 1,
    **dadurch gekennzeichnet**, daß das Verknüpfungsglied ein Und-Gatter (16) ist, wodurch mit den beiden Empfangszweigen (17, 18) eine Überrreichweitenerkennung der Zielechosignale gegeben ist.

4.  Puls-Doppler-Radar nach Anspruch 1,
    **dadurch gekennzeichnet**, daß mindestens drei Empfangszweige (17, 18, 19) vorgesehen sind, jeweils zwei dieser Empfangszweige (17, 18, 19) über ein Und-Gatter (10, 11, 12) zusammengeführt sind, und
    die Ausgänge der Und-Gatter (10, 11, 12) an einem Oder-Gatter (13) anliegen, dem das Sichtgerät (14) nachgeschaltet ist, wodurch sowohl eine lückenlose Dopplerbedeckung als auch eine Überrreichweitenerkennung gegeben ist.

EP 0 444 458 A2

# FIG 1

# FIG 2

$$PRF1 \neq PRF2 \quad ; \quad f1 \neq f2$$

# FIG 3

# FIG 4

$$PRF1 \neq PRF2 \neq PRF3 \neq \ldots$$
$$f1 \neq f2 \neq f3 \neq \ldots$$